(19) Europäisches Patentamt
European Patent Office
Office européen des brevets

(11) **EP 2 778 137 B1**

(12) **EUROPEAN PATENT SPECIFICATION**

(45) Date of publication and mention
of the grant of the patent:
**27.02.2019 Bulletin 2019/09**

(21) Application number: **12848647.9**

(22) Date of filing: **08.11.2012**

(51) Int Cl.:
*C01F 7/00* *(2006.01)*  *C09C 1/40* *(2006.01)*

(86) International application number:
**PCT/JP2012/079016**

(87) International publication number:
**WO 2013/069742 (16.05.2013 Gazette 2013/20)**

(54) **HYDROTALCITE AND METHOD FOR PRODUCING SAME**

HYDROTALCIT UND HERSTELLUNGSVERFAHREN DAFÜR

HYDROTALCITE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2011 JP 2011247938**

(43) Date of publication of application:
**17.09.2014 Bulletin 2014/38**

(73) Proprietor: **Sakai Chemical Industry Co., Ltd.
Sakai-shi, Osaka 590-8502 (JP)**

(72) Inventors:
• **SHIGI Nobukatsu**
**Sakai-shi**
**Osaka 590-0985 (JP)**
• **TSUDA Koichi**
**Sakai-shi**
**Osaka 590-0985 (JP)**
• **ONISHI Naomi**
**Sakai-shi**
**Osaka 590-0985 (JP)**

(74) Representative: **Hart-Davis, Jason et al
Cabinet Beau de Loménie
158, rue de l'Université
75340 Paris Cedex 07 (FR)**

(56) References cited:
**WO-A1-01/12550       WO-A2-2007/097795
JP-A- 2000 128 527    JP-A- 2007 308 362
JP-A- 2008 214 465    US-A1- 2004 141 907**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 778 137 B1

**Description**

TECHNICAL FIELD

The present invention relates to hydrotalcite and a method for producing hydrotalcite.

BACKGROUND ART

Hydrotalcite is one of compounds represented by the formula $[M^{2+}_{1-x}M^{3+}_x(OH)_2] [A^{n-}_{x/n} \cdot mH_2O]$ (wherein $M^{2+}$ represents a divalent metal ion, $M^{3+}$ represents a trivalent metal ion, $A^{n-}_{x/n}$ represents an interlayer anion, x satisfies the inequality 0<x<1, n is the valence of A, and m satisfies the inequality $0 \leq m<1$), and is a substance used as, for example, a catalyst, a pharmaceutical, or an additive for resins.

Hydrotalcite occurs naturally, but the amount thereof is small. Hence, synthetic hydrotalcites are generally used. Although various methods for synthesizing hydrotalcite are known, general synthetic hydrotalcites are sometimes insufficient in quality depending on the intended use. For example, hydrotalcite to be used as an additive for resins is desired to have a comparatively large particle size. For example, a divalent metal salt (e.g., magnesium compound, zinc compound) and a trivalent metal salt (e.g., aluminum compound) are used for a material of the hydrotalcite. In order to sufficiently grow the particles to produce hydrotalcite with a large particle size, it is required to increase the reactivity of these metal compounds for the material used to produce hydrotalcite. The production methods have therefore been improved from the aspects of, for example, the kind of materials and reaction conditions.

The material metal compounds need to be finely ground into base powder having a small particle size suited for the reaction, in order to increase the reactivity of the metal compounds. Thus, various methods have been tried for grinding.

One method suitable for obtaining fine powder is wet grinding with a bead mill using beads that contain zirconia (e.g., zirconia beads) (Patent Literature 1, Patent Literature 2).

Patent Literature 3 shows a method for the manufacture of hydrotalcites by using at least one compound of a bivalent metal (Component A) and at least one compound of a trivalent metal (Component B), wherein at least one of these components is not used in the form of a solution, characterized in that a) at least one of the Components A and/or B which is not used in the form of a solution, shortly before or during mixing of the components, and/or b) the mixture containing the Components A and B is subjected to intensive grinding until an average particle size $(D_{50})$ in the range of approx. 0.1 to 5 $\mu$m is obtained, and optionally, after aging treatment of hydrothermal treatment, the resulting hydrotalcite product is separated, dried, and optionally calcined.

CITATION LIST

Patent Literature

Patent Literature 1: JP 2006-017828 A
Patent Literature 2: JP 2004-269317 A
Patent Literature 3: US 2004/0141907 A1

SUMMARY OF INVENTION

Technical Problem

The above method in Patent Literature 1 and Patent Literature 2, however, is not a method for producing hydrotalcite. Accordingly, it has not been known in detail how much zirconia would be contained in hydrotalcite under what conditions if a bead mill containing zirconia is actually used as the bead mill in production of hydrotalcite. Also, it has not been known in detail what kind of influence hydrotalcite would have on a resin if the hydrotalcite contains zirconia and is used as the additive for the resin.

The present inventors have found that if the resulting hydrotalcite contains a certain amount or more of zirconia, and the hydrotalcite is mixed into a resin such as polyvinyl chloride resin, then the transparency of the resin unfortunately decreases rapidly.

Solution to Problem

The present inventors therefore have made intensive studies to control the zirconia content in hydrotalcite. As a result, they have found that controlling the temperature increase associated with the heat generated by the slurry in grinding to 50°C or lower suppresses wear of beads in wet grinding, and controls the Zr content in hydrotalcite to 50 ppm or lower. The inventors have also found that mixing hydrotalcite having a Zr content of 50 ppm or lower into a resin such as polyvinyl chloride resin gives significantly improved transparency to the resin. Thereby, the present invention has been completed.

That is, the first aspect of the present invention is the method of claim 1.

The Zr content in the above method for producing hydrotalcite is a value obtained by converting the amount of any zirconium compound (e.g. zirconia) contained in the obtained hydrotalcite into the amount of Zr.

In a preferred embodiment, the slurry preparation step further includes adding a carboxylic acid group-containing compound to the slurry that contains at least one material selected from the group consisting of hydroxides, oxides, and carbonates of aluminum, magnesium, or zinc so as to give a solids concentration of 25% by mass or higher to the slurry.

In a preferred embodiment, the wet grinding in the wet grinding step is performed while the temperature of the slurry is maintained at 40°C or lower, and hydrotalcite having a Zr content of 10 ppm or lower is synthesized in the hydrothermal treatment step.

In a preferred embodiment, the method further includes the step of filtering the slurry after the hydrothermal treatment step to obtain hydrotalcite and a filtrate, and bringing the filtrate into contact with carbon dioxide gas to collect carbonate.

In a preferred embodiment, the carboxylic acid group-containing compound is at least one carboxylic acid group-containing compound selected from saturated fatty acids, hydroxycarboxylic acids, aromatic carboxylic acids, dicarboxylic acids, and oxocarboxylic acids.

The second aspect of the present invention is hydrotalcite obtainable by the above method, the hydrotalcite having a BET specific surface area of 1 $m^2$/g to 30 $m^2$/g, and a Zr content of 50 ppm or lower.

Advantageous Effects of Invention

The present invention enables production of hydrotalcite having a Zr content controlled to 50 ppm or lower by subjecting the slurry to wet grinding with, for example, zirconia beads, while the temperature of the slurry is maintained at 50°C or lower. The resulting hydrotalcite having a Zr content of 50 ppm or lower, when mixed into a resin such as polyvinyl chloride resin, gives significantly improved transparency to the resin.

BRIEF DESCRIPTION OF DRAWINGS

[Fig. 1] Fig. 1 is a chart showing the XRD measurement result of the product obtained in Example 1.
[Fig. 2] Fig. 2 is a chart showing the XRD measurement result of the product obtained in Example 2.
[Fig. 3] Fig. 3 is a chart showing the XRD measurement result of the product obtained in Example 3.
[Fig. 4] Fig. 4 is a chart showing the XRD measurement result of the product obtained in Example 4.
[Fig. 5] Fig. 5 is a chart showing the XRD measurement result of the product obtained in Example 5.
[Fig. 6] Fig. 6 is a chart showing the XRD measurement result of the product obtained in Example 6.
[Fig. 7] Fig. 7 is a chart showing the XRD measurement result of the product obtained in Comparative Example 1.
[Fig. 8] Fig. 8 is a chart showing the XRD measurement result of the product obtained in Comparative Example 2.
[Fig. 9] Fig. 9 is a chart showing the XRD measurement result of the product obtained in Comparative Example 3.
[Fig. 10] Fig. 10 is a chart showing the XRD measurement result of the product obtained in Comparative Example 4.

DESCRIPTION OF EMBODIMENTS

The present invention is described in detail in the following.

The production method of the present invention is a method for producing hydrotalcite from materials of an aluminum compound and a magnesium compound and/or a zinc compound.

The production method of the present invention at least includes the step of preparing a slurry (hereinafter, also referred to as a slurry preparation step), the step of wet grinding particles in the slurry (hereinafter, also referred to as a wet grinding step), and the hydrothermal treatment step. The production method may include steps other than these steps as needed.

Slurry preparation step

The slurry preparation step is a step of preparing a slurry for use in wet grinding, as a preceding step of the wet grinding. The above slurry contains at least one material selected from the group consisting of hydroxides, oxides, and carbonates of aluminum, magnesium, or zinc. The materials of hydrotalcite may be in any form such as solids or solutions. Actually, many of the above preferred materials of hydroxides, oxides, and carbonates are poorly soluble in water or a solvent, and are thus used in the form of solids. If at least one of the materials, namely a magnesium compound, a zinc compound, and an aluminum compound, is not soluble in an aqueous solvent, a slurry which is subjected to the subsequent wet grinding is prepared by mixing these materials and additives as needed. If there are multiple materials that are not soluble in an aqueous solvent (e.g., solids, powder), one, some, or all of the materials may be mixed to form the slurry. The rest of the materials is added to the slurry at a point between the wet grinding and the hydrothermal treatment.

The solids concentration of the slurry is not particularly limited, but is preferably 1 to 70% by mass.

In the above range, particularly in the case that the solids concentration of the slurry is from 1% by mass inclusive to 25% by mass exclusive, the viscosity of the slurry does not increase very high after the grinding, and thus a special additive or the like is not required for purposes such as decreasing the viscosity. Hence, in the above case, a slurry containing one, some, or all of the above materials may be prepared for use in the subsequent wet grinding step.

In terms of the production efficiency, the solids concentration in the above case is more preferably from 10% by mass inclusive to 25% by mass exclusive.

In contrast, a solids concentration of the slurry of 25% by mass or higher increases the viscosity of the slurry in grinding and, with such a viscosity, the efficiency of grinding decreases. To cope with the situation, a carboxylic acid group-containing compound is added to the slurry. In this case, a slurry having a solids concentration of 25% by mass or higher can be subjected to grinding without problems due to the increased viscosity.

Grinding for a highly concentrated slurry to which a carboxylic acid group-containing compound is added is advantageous in terms of the production efficiency and wear of the grinding media. The above solids concentration is more preferably 30% by mass or higher.

The upper limit for the solids concentration is not particularly limited if the wet grinding can be satisfactorily performed. Still, the solids concentration is generally preferably 70% by mass or lower as described above, and is more preferably 60% by mass or lower.

Specific examples of the saturated fatty acids include, but not particularly limited to, formic acid, acetic acid, propionic acid, butyric acid, valeric acid, caproic acid, enanthic acid, caprylic acid, pelargonic acid, capric acid, lauric acid, myristic acid, palmitic acid, stearic acid, and behenic acid. Specific examples of the hydroxycarboxylic acids include, but not particularly limited to, lactic acid, malic acid, citric acid, o-hydroxybenzoic acid, m-hydroxybenzoic acid, p-hydroxybenzoic acid, and salicylic acid. Specific examples of the aromatic carboxylic acids include, but not particularly limited to, benzoic acid, phthalic acid, isophthalic acid, terephthalic acid, salicylic acid, gallic acid, mellitic acid, and cinnamic acid. Specific examples of the dicarboxylic acids include, but not particularly limited to, oxalic acid, malonic acid, succinic acid, glutaric acid, adipic acid, fumaric acid, and maleic acid. Specific examples of the oxocarboxylic acids include, but not particularly limited to, pyruvic acid, phthalaldehydic acid, isophthalaldehydic acid, terephthalaldehydic acid, 6-formyl-2,3-dimethoxybenzoic acid, o-acetylbenzoic acid, m-acetylbenzoic acid, p-acetylbenzoic acid, o-benzoylbenzoic acid, m-benzoylbenzoic acid, p-benzoylbenzoic acid, and benzophenone-4,4'-dicarboxylic acid.

Particularly, the carboxylic acid group-containing compound is preferably a C1 to C10 saturated fatty acid, and more preferably acetic acid and a C1 to C5 saturated fatty acid.

The suspension medium for the slurry is not particularly limited, but is preferably water. The suspension medium may contain liquid medium/media other than water as long as no adverse effect occurs.

The concentration (or mass) of the carboxylic acid group-containing compound is preferably 5 g or less, more preferably 3 g or less, and still more preferably 1 g or less, for each 100 g of the solids content.

The stirring device used for preparation of a slurry is not particularly limited, and may be, for example, a generally used stirrer or mixer.

Wet grinding step

After a slurry is prepared in accordance with the above description, the solids content in the slurry is wet ground, so that the size of the metallic compounds is reduced. In specific use such as use as an additive for resins, hydrotalcite with sufficiently grown particles of a comparatively large particle size is desired. With the above materials in the raw state, it is difficult to obtain hydrotalcite having a large particle size, and the form and particle size of the resulting hydrotalcite may vary. If the wet grinding is not performed, the reactivity of the aluminum compound decreases, which may produce byproducts such as boehmite ($AlO(OH)$) and dawsonite ($NaAl(OH)_2CO_3$). For this reason, the slurry containing the materials needs to be subjected to wet grinding to give fine pieces of the material and thereby increase the reactivity.

As described above, the viscosity of the slurry does not increase very high if the solids concentration of the slurry is from 1% by mass inclusive to 25% by mass exclusive. The slurry, without any additives, is therefore charged into a bead mill using zirconia beads or zirconia silica beads described below, and then subjected to wet grinding while the temperature of the slurry is maintained at 50°C or lower.

A solids concentration of 25% by mass or higher may possibly increase the viscosity of the slurry significantly as the wet grinding proceeds. Hence, a carboxylic acid group-containing compound is added to the slurry, so that a sudden rise of the viscosity is suppressed when the slurry is subjected to wet grinding. Also in this case, the wet grinding is performed in a bead mill using zirconia beads or zirconia silica beads while the temperature of the slurry containing a carboxylic acid group-containing compound is maintained at 50°C or lower.

In this way, a slurry having a solids concentration of 25% by mass or higher can be subjected to grinding without problems due to the increased viscosity if the slurry contains a carboxylic acid group-containing compound.

In the wet grinding step, the particles in the slurry are ground, so as to give the particles an average secondary particle size D50 of 1.5 $\mu$m or smaller and D90 of 10 $\mu$m or smaller, regardless of whether the slurry concentration is from 1% by mass inclusive to 25% by mass exclusive or is 25% by mass or higher. The term D50 refers to a particle size at which the cumulative volume of smaller particles constitutes 50% of the total particle volume in a particle size distribution. The term D90 refers to a particle size at which the cumulative volume of smaller particles constitutes 90% of the total particle volume in a particle size distribution. The values of D50 and D90 can be determined easily with, for example, a commercially available particle distribution meter.

The wet grinding is performed with a bead mill using beads. For the wet grinding, the above slurry is supplied to the bead mill. A bead mill is a device that makes the beads (grinding media) slide past each other in a grinding chamber to finely grind and disperse particles in a slurry. The present invention utilizes zirconia beads or zirconia silica beads as the beads.

Zirconia beads have characteristics of high strength, high toughness giving a decreased cracking tendency, and high specific gravity. Theoretically, a higher specific gravity gives a higher grinding and dispersion efficiency in wet grinding. The present invention therefore utilizes zirconia beads that have a relatively high specific gravity compared to other ceramic beads.

Bead mills sometimes cause a problem of contamination (mixing of foreign substance) because of wear of the beads. Although zirconia beads are comparatively less likely to be worn out, it is difficult to completely eliminate contamination. Zirconia silica beads are more likely to be worn out. It has been found out that, as a result of studies, if the temperature of the slurry is not controlled during grinding and thus zirconia wear debris is mixed into the resulting hydrotalcite and, if the hydrotalcite is mixed into a resin such as polyvinyl chloride resin, the hydrotalcite gives a significantly decreased transparency to the resin. Accordingly, in the present invention, the temperature of the slurry is controlled to 50°C or lower, and the Zr content in hydrotalcite is controlled to 50 ppm or lower.

The Zr content in hydrotalcite is more preferably 10 ppm or lower. In order to control the Zr content in hydrotalcite to 10 ppm or lower, the temperature of the slurry during grinding is preferably controlled to 40°C or lower.

The present inventors have found that controlling the temperature of the slurry in grinding to 50°C or lower suppresses wear of beads in wet grinding, and controls the Zr content in hydrotalcite to 50 ppm or lower. The temperature of the slurry can be controlled to 50°C or lower by, for example, cooling the wet grinding device using zirconia beads or zirconia silica beads during the wet grinding step. Thereby, the Zr content in hydrotalcite as a final product can be controlled to 50 ppm or lower.

The grinding time in the wet grinding step is not particularly limited, and can be generally appropriately selected from several minutes to several hours such that the dispersoid particles in the slurry have an average secondary particle size D50 of 1.5 $\mu$m or smaller and D90 of 10 $\mu$m or smaller.

If the suspension medium contains multiple poorly soluble materials, all these materials are mixed, and then the mixed materials may be wet ground together in one step, or any of the materials may be wet ground, and then other material(s) may be ground stepwise. The materials may be individually wet ground, and the ground materials may be mixed. Also, it is not necessary to wet grind all the materials poorly soluble in the suspension medium, and only part of the poorly soluble materials may be wet ground.

The interlayer anions contained in the hydrotalcite are not particularly limited, but are preferably carbonate ions. Carbonate ions can be supplied into the slurry in the form of carbon dioxide gas or a salt such as hydrogencarbonate or carbonate. The time point at which the carbon dioxide gas, hydrogencarbonate, or carbonate is added to the mixture is not particularly limited, and may be before or after the wet grinding. It is particularly preferred to mix carbon dioxide gas, hydrogencarbonate, or carbonate into the mixture obtained through the wet grinding.

Hydrothermal treatment

After the wet grinding, the rest of the materials which do not require grinding is added to the slurry, and then the slurry is hydrothermally treated. The hydrothermal treatment can promote growth of the particles to synthesize hydrotalcite having a BET value of 1 $m^2/g$ to 30 $m^2/g$ and a Zr content of 50 ppm or lower.

The hydrothermal treatment is not particularly limited, but is generally performed in a heat resistant vessel such as an autoclave. Here, the treatment temperature is not particularly limited, but is preferably 120°C to 250°C, more preferably 130°C to 230°C, and still more preferably 140°C to 230°C. The internal pressure of the vessel during the treatment is not particularly limited, but is preferably 0.1 to 10 MPa, and more preferably 0.2 to 4 MPa. The treatment time is not particularly limited, but is 1 to 6 hours, for example, and is preferably 1 to 4 hours.

Other steps

The production method of the present invention may include step(s) other than the above slurry preparation step, wet grinding step, and hydrothermal treatment step. For example, the production method of the present invention may include the step (surface treatment step) of treating the surface of particles with the surface treatment agent as needed after the hydrothermal treatment step. Examples of the surface treatment agent include higher fatty acids, metal salts of higher fatty acids (metal soap), anionic surfactants, phosphate esters, and coupling agents such as silane coupling agents, titanium coupling agents, and aluminum coupling agents.

More specific examples of the surface treatment agents include higher fatty acids such as stearic acid, oleic acid, erucic acid, palmitic acid, and lauric acid; metal salts such as lithium salt, sodium salt, and potassium salt of these higher fatty acids; anionic surfactants such as sulfates of higher alcohols (e.g., stearyl alcohol, oleyl alcohol), sulfates of polyethylene glycol ether, amide-linked sulfates, ether-linked sulfonates, ester-linked sulfonates, amide-linked alkyl aryl sulfonates, and ether-linked alkyl aryl sulfonates; phosphate esters such as mono- or di-esters of orthophosphoric acid and an alcohol (e.g., oleyl alcohol, stearyl alcohol), and mixtures of these esters which are in the acid form, or alkali metal salts or amine salts; silane coupling agents such as vinylethoxysilane, γ-methacryloxypropyl trimethoxysilane, vinyltris(2-methoxyethoxy)silane, and γ-aminopropyl trimethoxysilane; titanium coupling agents such as isopropyltriisostearoyl titanate, isopropyltris(dioctylpyrophosphate)titanate, and isopropyltridecyl benzenesulfonyl titanate; and alkali coupling agents such as acetoalkoxy aluminum diisopropylate.

If the surface treatment is performed, hydrotalcite is preferably surface-treated with the surface treatment agent added thereto in an amount of 0.1 to 15% by mass of the hydrotalcite, and preferably 0.5 to 5% by mass of the hydrotalcite.

The method for surface treatment is not particularly limited, and can be any appropriate method such as a conventionally known wet method or dry method. In the case of the wet method, surface treatment may be performed by adding the surface treatment agent in the form of a solution or emulsion to a slurry containing hydrotalcite, sufficiently mixing the resulting mixture with stirring while heating the mixture to 100°C as needed, filtering off the hydrotalcite, and washing and drying the hydrotalcite.

After the hydrothermal treatment, steps such as a step of filtering the slurry to obtain hydrotalcite, and a washing and drying step may be performed as needed.

For example, preferably, the hydrothermally treated slurry is filtered to separate the solids (cake) containing hydrotalcite from the filtrate, and then the collected solids are washed with water as needed. The number of times for washing with water is not particularly limited. After that, the filtered-off solids are collected and then dried in, for example, an oven, and the dried solids are dry ground as needed. Thereby, a desired hydrotalcite can be obtained.

In one preferred embodiment, the above production method may further include the step of bringing the filtrate into contact with carbon dioxide gas. In the production method of the present invention, a carbonate is generated as a byproduct after the reaction. The carbonate is converted into hydrogencarbonate when brought into contact with and reacted with carbon dioxide gas ($CO_2$) (e.g., $Na_2CO_3 \rightarrow NaHCO_3$). The resulting hydrogencarbonate is recyclable, and can be used as a material of another hydrotalcite. Accordingly, the problem of disposal of the byproduct, which has been a problem of the conventional methods, can be solved. The present invention is therefore advantageous from the environmental and economical aspects.

Hydrotalcite

The hydrotalcite produced by the above method for producing hydrotalcite has a BET specific surface area of 1 $m^2/g$ to 30 $m^2/g$, preferably 3 $m^2/g$ to 30 $m^2/g$, and more preferably 5 $m^2/g$ to 25 $m^2/g$. The BET specific surface area can be measured using a commercially available specific surface area/pore distribution measuring device in accordance with, for example, JIS Z8830.

The Zr content in hydrotalcite can be measured by the following method using inductively coupled-plasma (ICP) emission spectroscopy.

The following shows the specific analytical method.

The measurement is performed with ICP1700HVR from Seiko Instruments Inc. under the following conditions.

A specimen (about 2.5 g) is accurately weighed in a beaker, and nitric acid (specific gravity: 1.38, about 5 mL) was added thereto, so that the specimen was dissolved. The resulting solution is charged into a 100-mL measuring volumetric flask, and the flask is filled up with ion exchange water. The resulting solution is taken as the test solution, and the solution is subjected to measurement under the following conditions. Using the raw data obtained, the Zr content is calculated under the following calculation conditions.

The measurement conditions are described below.

A calibration curve is formed at a wavelength of 339.295 nm with the above spectroscope, and the specimen is subjected to measurement. The calibration curve is made by using three specimens for calibration curve which contain Zr at concentrations of 0, 0.5 and 1.0 ppm, respectively, for example.

The calculation conditions are as follows.

$$Zr\ (ppm) = raw\ data \times 100/sample\ (g)$$

Specific examples of hydrotalcite obtained by the above method include hydrotalcites represented by the following formula (1):

$$[(Mg^{2+})_x(Zn^{2+})_y]_{1-z}(Al^{3+})_z(OH)_2(CO_3^{2-})_{z/2} \cdot mH_2O \qquad (1)$$

wherein x, y, z, and m are values that satisfy the inequalities of $0.5 \leq x \leq 1$, $0 \leq y \leq 0.5$, $x+y=1$, $0.1 \leq z \leq 0.5$, and $0 \leq m < 1$).

The hydrotalcites also satisfy the following conditions (1) to (8) in X-ray diffraction:

(1) the intensity ratio of the peak of $2\theta=39$ (deg) to the peak of $2\theta=60.7$ (deg) is 0.3 or more,
(2) the intensity ratio of the peak of $2\theta=39$ (deg) to the peak of $2\theta=62$ (deg) is 0.3 or more,
(3) the intensity ratio of the peak of $2\theta=46.5$ (deg) to the peak of $2\theta=60.7$ (deg) is 0.25 or more,
(4) the intensity ratio of the peak of $2\theta=46.5$ (deg) to the peak of $2\theta=62$ (deg) is 0.25 or more,
(5) the intensity ratio of the peak of $2\theta=53$ (deg) to the peak of $2\theta=60.7$ (deg) is 0.05 or more,
(6) the intensity ratio of the peak of $2\theta=53$ (deg) to the peak of $2\theta=62$ (deg) is 0.05 or more,
(7) the intensity ratio of the peak of $2\theta=56.4$ (deg) to the peak of $2\theta=60.7$ (deg) is 0.03 or more, and
(8) the intensity ratio of the peak of $2\theta=56.4$ (deg) to the peak of $2\theta=62$ (deg) is 0.03 or more.

The hydrotalcite obtained through the above steps can be suitably used as, for example, an additive for resins, and a resin to which the obtained hydrotalcite is added exhibits excellent characteristics in terms of the heat resistance, press heat resistance, and transparency.

EXAMPLES

The present invention is described further in detail by way of the examples. These examples should not limit the scope of the invention. In the examples, "part(s)" and "%" respectively refer to "part(s) by mass" and "% by mass", unless otherwise specified.

(Method for measuring D50 and D90)

In the following examples and comparative examples, D50 and D90 in a slurry were measured with a particle-size distribution meter (Microtrac MT3300EX from Nikkiso Co., Ltd.). Specifically, a 0.025-wt% aqueous solution (180 mL) of sodium hexametaphosphate was prepared in a specimen chamber in the measurement device (particle size distribution meter). Into the solution, a specimen (about 0.1 g) was dropped. The resulting mixture was subjected to the measurement including circulating the mixture with the ultrasonic dispersion function of the measurement device at an ultrasonic flowing rate of 50% and an output of 30 W for 120 seconds. The measurement was performed twice, and the average of the measured values was taken as the measurement value.

(Method for measuring electric conductivity)

The electric conductivity of water for washing was measured using a conductive meter (electric conductivity meter CM-40S) from DKK-TOA Corporation. The measurement temperature for the specimen was 25°C.

(Method for measuring BET specific surface area)

The BET specific surface area was measured in accordance with JIS Z8830.

(Method for measuring XRD)

The XRD was measured using RINT-TTR III from Rigaku Corporation under the following conditions.
The specimen (about 3 g) was charged into a holder, and subjected to the measurement under the measurement condition A. The obtained raw data was processed under the data processing condition B, so that the XRD was determined under the peak searching condition C.

Measurement condition A

Angle $2\theta$: 37 to 70 (deg)
Sampling width: 0.01°
Scan speed: 1°/min
Voltage: 50 kV
Electric current: 300 mA

Data processing condition B

Background: straight line fit, threshold = 3.0, BG offset = 0.3
K$\alpha$2 peak removal: removed
Smoothing: Wavelet smoothing 2.1

Peak searching condition C

Filter type: 31 parabola filter
Peak-value determination: Peak top
K$\alpha$2 peak: removed from list
Threshold and range: threshold = 0.5, peak intensity cutoff = 0.5, range of BG determination = 5
BG equalization point = 15

(Example 1) Production of hydrotalcite

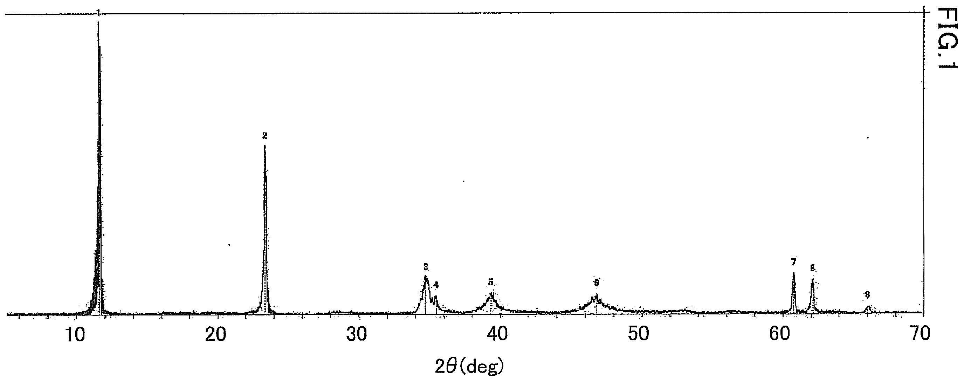

A 5-L vessel was charged with magnesium hydroxide (D50 = 4.0 $\mu$m, 447.3 g), aluminum hydroxide (D50 = 8.0 $\mu$m, 299.2 g), and water in an amount that gives a total amount of the mixture of 3 L. The mixture was stirred for 10 minutes, so that a slurry was prepared. The slurry had a D50 of 10 $\mu$m, and a D90 of 75 $\mu$m. The slurry was supplied into a wet grinding device having a refrigeration unit (DYNO-MILL MULTILAB from SHINMARU ENTERPRISES CORPORATION, filled with zirconia beads). The slurry was subjected to wet grinding for 18 minutes (residual time) while the temperature of the slurry was maintained at 40°C or lower during the grinding. The resulting slurry had a D50 of 1.0 $\mu$m, a D90 of 3.5 $\mu$m, and a viscosity of 5000 mPa·s. To the slurry (2 L) having been subjected to the grinding, sodium hydrogencarbonate was added in an amount of 1/2 mol per mole of the magnesium hydroxide. Water was added to the slurry so that the total amount of the slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L). The filter cake was further washed with ion exchange water (100 mL), and the electric conductivity of the water used for washing was measured. The measured electric conductivity of the water used for washing was 50 $\mu$S/cm (25°C). The obtained water-washed cake was dried at 100°C for 24 hours and then ground, whereby a solid product was obtained. Fig. 1 is a chart showing the XRD measurement results of the product obtained in Example 1. The chart in Fig. 1 shows diffraction peaks attributed to hydrotalcite which has main peaks around $2\theta$ (deg) = 12. Thereby, the product was identified as hydrotalcite. The obtained hydrotalcite had a BET specific surface area of 11.5 $m^2$/g and a Zr content of 5 ppm. The BET specific surface area of the hydrotalcite before the surface treatment with stearic acid was 14.0 $m^2$/g.

(Example 2) Production of hydrotalcite

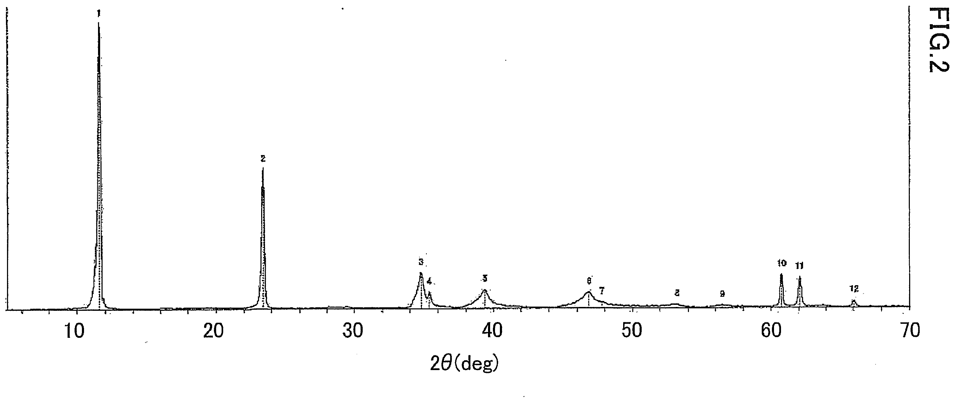

A 5-L vessel was charged with magnesium hydroxide (D50 = 4.0 $\mu$m, 447.3 g), aluminum hydroxide (D50 = 8.0 $\mu$m, 299.2 g), and water in an amount that gives a total amount of the mixture of 3 L. The mixture was stirred for 10 minutes, so that a slurry was prepared. The slurry had a D50 of 10 $\mu$m, and a D90 of 75 $\mu$m. The slurry was supplied into a wet grinding device having a refrigeration unit (DYNO-MILL MULTILAB from SHINMARU ENTERPRISES CORPORATION, filled with zirconia beads). The slurry was subjected to wet grinding for 18 minutes (residual time) while the temperature of the slurry was maintained at 50°C or lower during the grinding. The resulting slurry had a D50 of 1.0 $\mu$m, a D90 of 3.5 $\mu$m, and a viscosity of 4800 mPa·s. To the slurry (2 L) having been subjected to the grinding, sodium hydrogencarbonate was added in an amount of 1/2 mol per mole of the magnesium hydroxide. Water was added to the slurry so that the total amount of the slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L). The filter cake was further washed with ion exchange water (100 mL), and the electric conductivity of the water used for washing was measured. The measured electric conductivity of the water used for washing was 50 $\mu$S/cm (25°C). The obtained water-washed cake was dried at 100°C for 24 hours and then ground, whereby a solid product was obtained. Fig. 2 is a chart showing the XRD measurement results of the product obtained in Example 2. From the diffraction peaks in the chart shown in Fig. 2, the product was identified as hydrotalcite.
The obtained hydrotalcite had a BET specific surface area of 11.5 m$^2$/g and a Zr content of 45 ppm.

(Comparative Example 1) Production of hydrotalcite

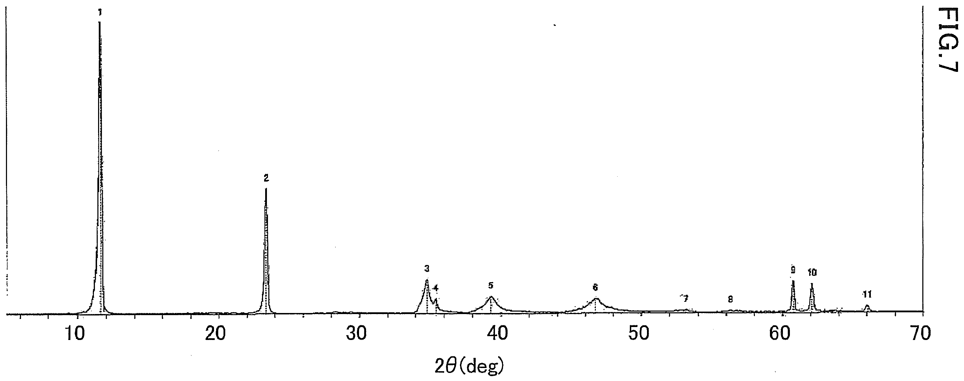

A 5-L vessel was charged with magnesium hydroxide (D50 = 4.0 $\mu$m, 447.3 g), aluminum hydroxide (D50 = 8.0 $\mu$m, 299.2 g), and water in an amount that gives a total amount of the mixture of 3 L. The mixture was stirred for 10 minutes, so that a slurry was prepared. The slurry had a D50 of 10 $\mu$m, and a D90 of 75 $\mu$m. The slurry was supplied into a wet grinding device having a refrigeration unit (DYNO-MILL MULTILAB from SHINMARU ENTERPRISES CORPORATION, filled with zirconia beads). The slurry was subjected to wet grinding for 18 minutes (residual time) while the temperature of the slurry was maintained at 55°C or lower during the grinding. The resulting slurry had a D50 of 1.0 $\mu$m, a D90 of 3.5 $\mu$m, and a viscosity of 4400 mPa·s. To the slurry (2 L) having been subjected to the grinding, sodium hydrogencarbonate was added in an amount of 1/2 mol per mole of the magnesium hydroxide. Water was added to the slurry so that the total amount of the slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L) . The filter cake was further washed with ion exchange water (100 mL), and the electric conductivity of the water used for washing was measured. The measured electric conductivity of the water used for washing was 50 $\mu$S/cm (25°C). The obtained water-washed cake was dried at 100°C for 24 hours and then ground, whereby a solid product was obtained. Fig. 7 is a chart showing the XRD measurement results of the product obtained in Comparative Example 1. From the diffraction peaks in the chart shown in Fig. 7, the product was identified as hydrotalcite.
The obtained hydrotalcite had a BET specific surface area of 11.5 m$^2$/g and a Zr content of 55 ppm.

(Comparative Example 2) Production of hydrotalcite

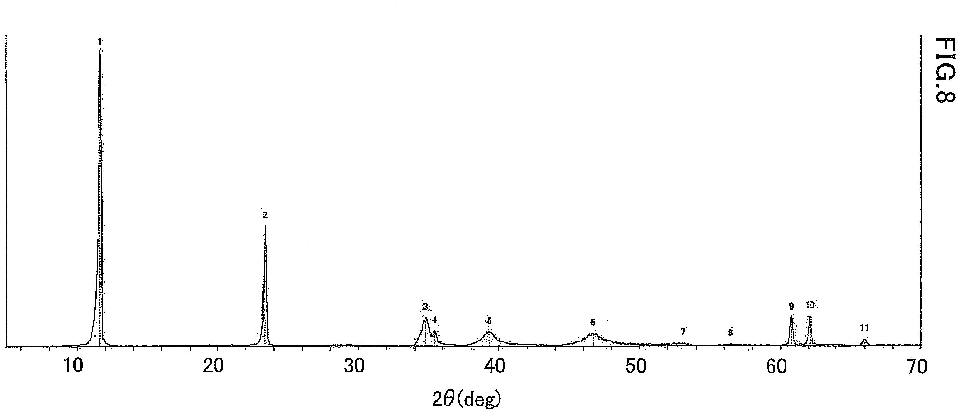

A 5-L vessel was charged with magnesium hydroxide (D50 = 4.0 $\mu$m, 447.3 g), aluminum hydroxide (D50 = 8.0 $\mu$m, 299.2 g), and water in an amount that gives a total amount of the mixture of 3 L. The mixture was stirred for 10 minutes, so that a slurry was prepared. The slurry had a D50 of 10 $\mu$m, and a D90 of 75 $\mu$m. The slurry was supplied into a wet grinding device having a refrigeration unit (DYNO-MILL MULTILAB from SHINMARU ENTERPRISES CORPORATION, filled with zirconia beads). The slurry was subjected to wet grinding for 18 minutes (residual time). The resulting slurry had a D50 of 1.0 $\mu$m, a D90 of 4 $\mu$m, and a viscosity of 4000 mPa·s. The final temperature of the slurry was 65°C. The slurry having been subjected to the grinding was cooled to room temperature. To the slurry (2 L), sodium hydrogencarbonate was added in an amount of 1/2 mol per mole of the magnesium hydroxide. Water was added to the slurry so that the total amount of the slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L) . The filter cake was further washed with ion exchange water (100 mL), and the electric conductivity of the water used for washing was measured. The measured electric conductivity of the water used for washing was 60 µS/cm (25°C). The obtained water-washed cake was dried at 100°C for 24 hours and then ground, whereby a solid product was obtained. Fig. 8 is a chart showing the XRD measurement results of the product obtained in Comparative Example 2. From the diffraction peaks in the chart shown in Fig. 8, the product was identified as hydrotalcite.

The obtained hydrotalcite had a BET specific surface area of 12.0 m$^2$/g and a Zr content of 100 ppm.

(Example 3) Production of hydrotalcite

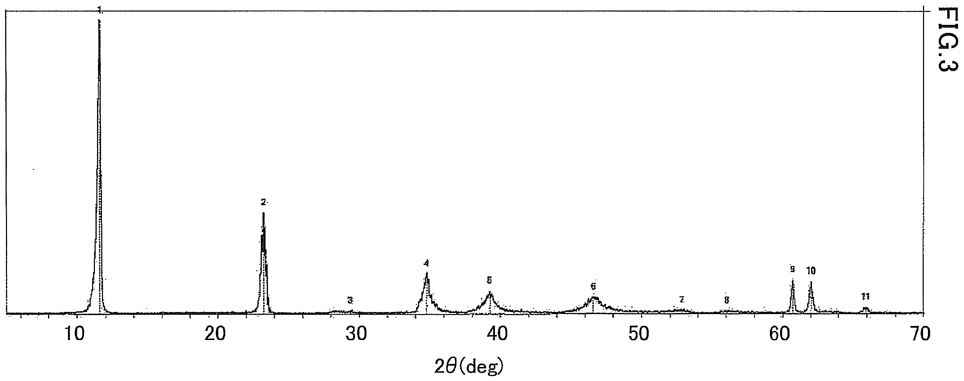

A 5-L vessel was charged with magnesium hydroxide (D50 = 4.0 µm, 447.3 g), aluminum hydroxide (D50 = 8.0 µm, 299.2 g), and water in an amount that gives a total amount of the mixture of 3 L. The mixture was stirred for 10 minutes, so that a slurry was prepared. The slurry had a D50 of 10 µm, and a D90 of 75 µm. The slurry was supplied into a wet grinding device having a refrigeration unit (DYNO-MILL MULTILAB from SHINMARU ENTERPRISES CORPORATION, filled with zirconia beads). The slurry was subjected to wet grinding for 18 minutes (residual time) while the temperature of the slurry was maintained at 40°C or lower during the grinding. The resulting slurry had a D50 of 1.0 µm, a D90 of 3.5 µm, and a viscosity of 5000 mPa·s. To the slurry (2 L) having been subjected to the grinding, sodium carbonate was added in an amount of 1/2 mol per mole of the magnesium hydroxide. Water was added to the slurry so that the total amount of the slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L) . The filter cake was further washed with ion exchange water (100 mL), and the electric conductivity of the water used for washing was measured. The measured electric conductivity of the water used for washing was 60 µS/cm (25°C). The obtained water-washed cake was dried at 100°C for 24 hours and then ground, whereby a solid product was obtained. Fig. 3 is a chart showing the XRD measurement results of the product obtained in Example 3. From the diffraction peaks in the chart shown in Fig. 3, the product was identified as hydrotalcite.

The obtained hydrotalcite had a BET specific surface area of 12.5 m$^2$/g and a Zr content of 5 ppm.

(Example 4) Production of hydrotalcite

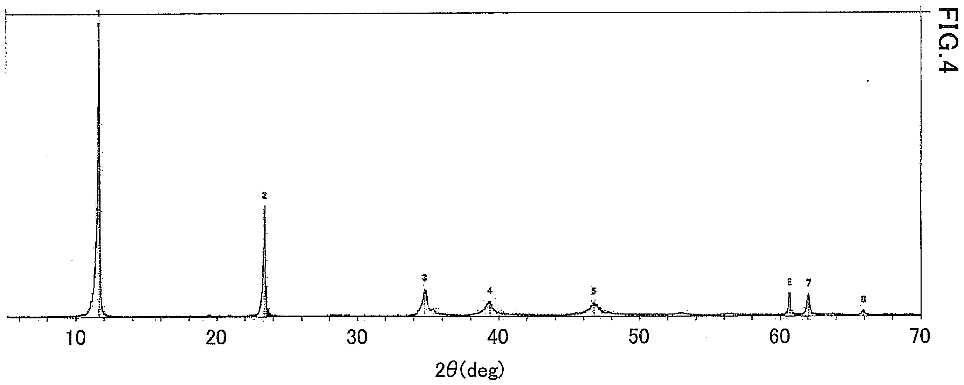

A 5-L vessel was charged with magnesium hydroxide (D50 = 4.0 µm, 391.4 g), zinc oxide (D50 = 7.5 µm, 78.1 g), aluminum hydroxide (D50 = 8.0 µm, 299.2 g) and water in an amount that gives a total amount of the mixture of 3 L. The mixture was stirred for 10 minutes, so that a slurry was prepared. The slurry had a D50 of 10 µm, and a D90 of 75 µm. The slurry was supplied into a wet grinding device having a refrigeration unit (DYNO-MILL MULTILAB from SHINMARU ENTERPRISES CORPORATION, filled with zirconia beads). The slurry was subjected to wet grinding for 18 minutes (residual time) while the temperature of the slurry was maintained at 40°C or lower during the grinding. The resulting slurry had a D50 of 1.0 µm, a D90 of 3.5 µm, and a viscosity of 5000 mPa·s. To the slurry (2 L) having been subjected to the grinding, sodium hydrogencarbonate was added in an amount of 1/2 mol per mole of the magnesium hydroxide. Water was added to the slurry so that the total amount of the slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L) . The filter cake was further washed with ion exchange water (100 mL), and the electric conductivity of the water used for washing was measured. The measured electric conductivity of the water used for washing was 50 µS/cm (25°C). The obtained water-washed cake was dried at 100°C for 24 hours and then ground, whereby a solid product was obtained. Fig. 4 is a chart showing the XRD measurement results of the product obtained in Example 4. From the diffraction peaks in the chart shown in Fig. 4, the product was identified as hydrotalcite.

The obtained hydrotalcite had a BET specific surface area of 9.1 m$^2$/g and a Zr content of 5 ppm.

(Example 5) Production of hydrotalcite

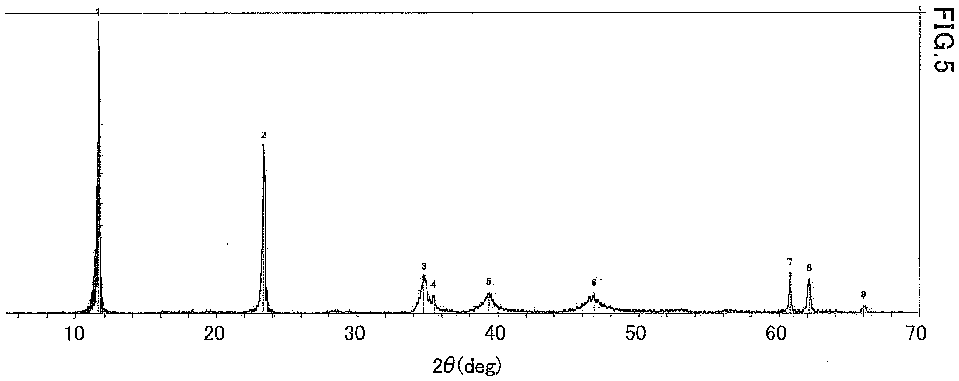

A 5-L vessel was charged with magnesium hydroxide (D50 = 4.0 µm, 894.7 g), aluminum hydroxide (D50 = 8.0 µm, 598.3 g), and water in an amount that gives a total amount of the mixture of 3 L. To the mixture was further mixed with acetic acid (reagent, 9.0 g). The mixture was stirred for 10 minutes, so that a slurry was prepared. The slurry had a D50 of 10 µm, and a D90 of 75 µm. The slurry was supplied into a wet grinding device having a refrigeration unit (DYNO-MILL MULTILAB from SHINMARU ENTERPRISES CORPORATION, filled with zirconia beads). The slurry was subjected to wet grinding for 18 minutes (residual time) while the temperature of the slurry was maintained at 40°C or lower during the grinding. The resulting slurry had a D50 of 1.0 µm, a D90 of 3.5 µm, and a viscosity of 1500 mPa·s. The slurry was then taken out of the wet grinding device. To the slurry (1 L) having been subjected to the grinding, sodium hydrogencarbonate was added in an amount of 1/2 mol per mole of the magnesium hydroxide. Water was added to the slurry so that the total amount of the slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were filtered through filtration, and the filter cake was washed with ion exchange water (35°C, 9 L). The filter cake was further washed with ion exchange water (100 mL), and the electric conductivity of the water used for washing was measured. The measured electric conductivity of the water used for washing was 50 μS/cm (25°C). The obtained water-washed cake was dried at 100°C for 24 hours and then ground, whereby a solid product was obtained. Fig. 5 is a chart showing the XRD measurement results of the product obtained in Example 5. From the diffraction peaks in the chart shown in Fig. 5, the product was identified as hydrotalcite.

The obtained hydrotalcite had a BET specific surface area of 11.5 m$^2$/g and a Zr content of 5 ppm.

(Comparative Example 3) Production of hydrotalcite

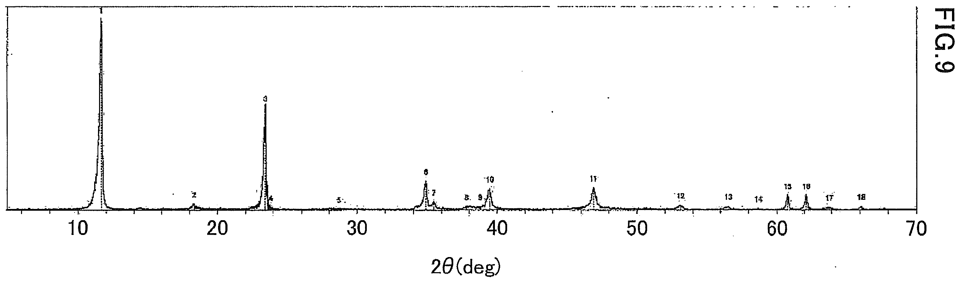

A slurry was prepared in the same manner as in Example 5 except that the wet grinding was not performed. The prepared slurry was hydrothermally treated in an autoclave at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration. The obtained filter cake was washed with ion exchange water (35°C, 9 L). The filter cake was further washed with ion exchange water (100 mL). The measured electric conductivity of the water used for washing was 90 μS/cm (25°C). The obtained water-washed cake was dried at 100°C for 24 hours and then ground, whereby a solid product was obtained. Fig. 9 is a chart showing the XRD measurement results of the product obtained in Comparative Example 3. As shown in the chart in Fig. 9, diffraction peaks attributed to boehmite (AlO(OH)), a byproduct, were detected as well as the diffraction peaks attributed to hydrotalcite.

The obtained product had a BET specific surface area of 15.0 m$^2$/g and a Zr content of 0 ppm.

(Comparative Example 4) Production of hydrotalcite

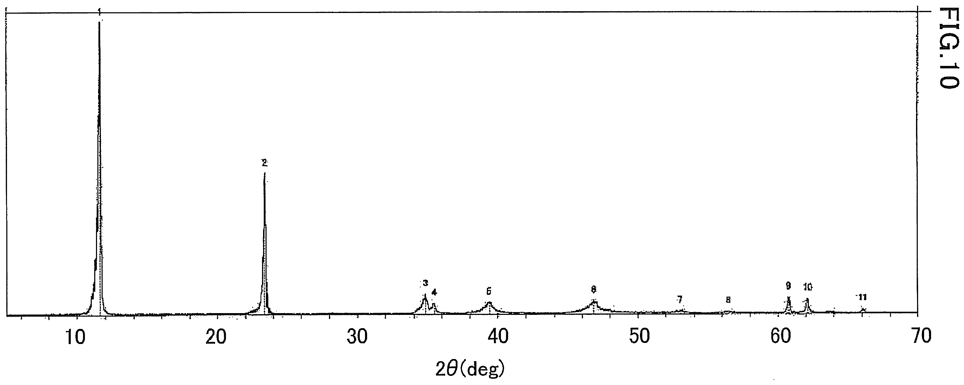

A 5-L vessel was charged with magnesium hydroxide (D50 = 4.0 μm, 894.7 g), aluminum hydroxide (D50 = 8.0 μm, 598.3 g), and water in an amount that gives a total amount of the mixture of 3 L. The mixture was stirred for 10 minutes, so that a slurry was prepared. The slurry had a D50 of 10 μm, and a D90 of 75 μm. The slurry was supplied into a wet grinding device having a refrigeration unit (DYNO-MILL MULTILAB from SHINMARU ENTERPRISES CORPORATION, filled with zirconia beads). The slurry was subjected to grinding while the temperature of the slurry was maintained at 40°C or lower, but the viscosity suddenly increased right after the start of the grinding. After about 5 minutes (residual time), the driving motor was stopped because of the overload thereto. The resulting slurry had a D50 of 4.0 μm, a D90 of 8.0 μm, and a viscosity of 9000 mPa·s. To the slurry (1 L) having been subjected to grinding, sodium hydrogencarbonate was added in an amount of 1/2 mol per mole of the magnesium hydroxide. Water was added to the slurry so that the total amount of the slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L). The filter cake was further washed with ion exchange water (100 mL), and the electric conductivity of the water used for washing was measured. The measured electric conductivity of the water used for washing was 90 μS/cm (25°C). The obtained water-washed cake was dried at 100°C for 24 hours and then ground, whereby a solid product was obtained. Fig. 10 is a chart showing the XRD measurement results of the product obtained in Comparative Example 4. From the diffraction peaks in the chart shown in Fig. 10, the product was identified as hydrotalcite.

The obtained hydrotalcite had a BET specific surface area of 13.5 m$^2$/g and a Zr content of 3 ppm.

(Example 6) Production of hydrotalcite

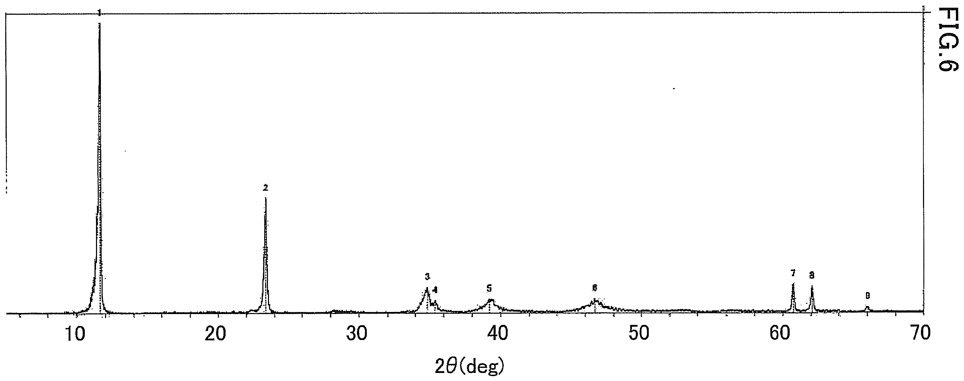

The slurry containing hydrotalcite obtained by the production method in Example 5 was filtered to produce a filter cake and a filtrate. The filtrate was aerated with carbon dioxide gas until the pH decreased from 10.0 to 8.0. The resulting reaction solution was filtered. The filtrate was converted from a sodium carbonate solution into a sodium hydrogencarbonate solution. Separately, a 5-L vessel was charged with magnesium hydroxide (D50 = 4.0 μm, 894.7 g), aluminum hydroxide (D50 = 8.0 μm, 598.3 g), and water in an amount that gives a total amount of the mixture of 3 L. The mixture was further mixed with acetic acid (reagent, 9.0 g). The mixture was stirred for 10 minutes, so that a slurry was prepared. The slurry had a D50 of 10 μm, and a D90 of 75 μm. The slurry was supplied into a wet grinding device having a refrigeration unit (DYNO-MILL MULTILAB from SHINMARU ENTERPRISES CORPORATION, filled with zirconia beads). The slurry was subjected to wet grinding for 18 minutes (residual time) while the temperature of the slurry was maintained at 40°C or lower during the grinding. The resulting slurry had a D50 of 1.0 μm, a D90 of 4 μm, and a viscosity of 1500 mPa·s. The slurry was then taken out of the wet grinding device. The filtrate obtained above was weighed and added to the slurry (1 L) having been subjected to grinding, so that the amount of sodium hydrogencarbonate was 1/2 mol per mole of the magnesium hydroxide. Water was added to the slurry so that the total amount of slurry was 8 L. The slurry was stirred for 10 minutes. The slurry (3 L) was transferred into the autoclave, and then hydrothermally reacted at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L). The filter cake was further washed with ion exchange water (100 mL), and the electric conductivity of the water used for washing was measured. The measured electric conductivity of the water used for washing was 50 μS/cm (25°C). The obtained water-washed cake was dried at 100°C for 24 hours and then ground, whereby a solid product was obtained. Fig. 6 is a chart showing the XRD measurement results of the product obtained in Example 6. From the diffraction peaks in the chart shown in Fig. 6, the product was identified as hydrotalcite.

The obtained hydrotalcite had a BET specific surface area of 11.5 m$^2$/g and a Zr content of 5 ppm.

(Reference Example) Production of hydrotalcite from liquid material

An aqueous solution (750 mL) of magnesium sulfate with an Mg concentration of 2.6 mol/L was mixed with an aqueous solution (475 mL) of industrial-use aluminum sulfate with an Al concentration of 2.1 mol/L. Water was added to this mixture, so that 1.5 L of a solution of a metal salt was prepared. Separately, an 18-N solution (277.5 mL) of NaOH was mixed with industrial-use $Na_2CO_3$ (158.66 g). Water was added to this mixture, so that 1.5 L of an alkali solution was prepared. The above solution of a metal salt and the alkali solution were mixed with stirring, and the resulting solution was stirred for about 30 minutes. Next, the resulting suspension containing a coprecipitate was hydrothermally treated at 170°C for 2 hours. While the temperature of the obtained slurry containing hydrotalcite was maintained at 95°C, stearic acid (9 g) was added to the slurry so that the particles were surface-treated. Subsequently, the solids were obtained by filtration, and the filter cake was washed with ion exchange water (35°C, 9 L). The filter cake was further washed with ion exchange water (100 mL), and the electric conductivity of the water used for washing was measured. The measured electric conductivity of the water used for washing was 1000 μS/cm (25°C). The obtained water-washed cake was dried at 100°C for 24 hours and then ground, whereby a solid product was obtained. The chart obtained from the X-ray diffraction of the product showed that the product was hydrotalcite, but the chart also showed that dawsonite occurred as a byproduct at the same time.

The obtained hydrotalcite had a BET specific surface area of 12.0 m$^2$/g and a Zr content of 0 ppm.

The following Table 1 shows whether or not acetic acid was added, the temperature during grinding, the viscosity of the slurry, the D50 and D90 values of the slurry, the BET specific surface area and Zr content of the hydrotalcite, and whether or not a byproduct occurred in the above examples and comparative examples.

(Evaluation)

To polyvinyl chloride resin (degree of polymerization: 1000, 100 parts by mass) were added dioctyl phthalate (50 parts by mass), zinc stearate (0.5 parts by mass), and hydrotalcite (2.1 parts by mass), so that a resin composition was produced. The composition was kneaded with a 160°C for 5 minutes and formed into a sheet shape by using a roll mill, so that a sheet was produced. The produced sheet was subjected to a gear oven test (described below) at 180°C, and the oven heat resistance was evaluated. Also, a press sheet was produced, and discoloration of the sheet after exposure at 170°C for 20 minutes was evaluated.

As to transparency, the press sheet was visually observed for evaluation. The following Table 1 shows the results.

The evaluation methods and the evaluation criteria are described below.

(Oven heat resistance by gear oven test)

The sheet was exposed to the 180°C atmosphere in a gear oven for 60 minutes, and the discoloration of the sheet after the exposure was evaluated by visually observation in accordance with the following criteria. Good: The sheet was not discolored.

Fair: The sheet was slightly discolored.

Poor: The sheet was discolored.

(Press heat resistance)

The sheet was pressed by a 170°C press for 20 minutes, and discoloration of the obtained sheet was evaluated by visual observation in accordance with the following criteria.

Evaluation criteria

Good: The sheet was not discolored.
Fair: The sheet was slightly discolored.
Poor: The sheet was discolored.

(Transparency)

The above sheet was pressed by a 170°C press for 5 minutes, and the transparency of the obtained sheet was evaluated by visual observation in accordance with the following criteria.

Evaluation criteria

Excellent: The sheet had no haze.
Good: The sheet had slight haze.
Fair: The sheet had haze.
Poor: The sheet had significant haze.
Very poor: The sheet had even more significant haze.

[Table 1]

| | Acetic acid (g) | Temperature during grinding (°C) | Viscosity of slurry after grinding (mPa·s) | D50 of slurry after grinding (μm) | D90 of slurry after grinding (μm) | Hydrotalcite | | | Characteristics of resin containing hydrotalcite | | |
|---|---|---|---|---|---|---|---|---|---|---|---|
| | | | | | | BET specific surface area (m$^2$/g) | Zr content (ppm) | Byproduct | Oven heat resistance | Press heat resistance | Transparency |
| Example 1 | Not added | ≤40°C | 5000 | 1.0 | 3.5 | 11.5 | 5 | None | Good | Good | Excellent |
| Example 2 | Not added | ≤50°C | 4800 | 1.0 | 3.5 | 11.5 | 45 | None | Good | Good | Excellent |
| Example 3 | Not added | ≤40°C | 5000 | 1.0 | 3.5 | 12.5 | 5 | None | Good | Fair | Good |
| Example 4 | Not added | ≤40°C | 5000 | 1.0 | 3.5 | 9.1 | 5 | None | Good | Good | Excellent |
| Example 5 | 9.0 | ≤40°C | 1500 | 1.0 | 3.5 | 11.5 | 5 | None | Good | Good | Excellent |
| Example 6 | 9.0 | ≤40°C | 1500 | 1.0 | 4.0 | 11.5 | 5 | None | Good | Good | Excellent |
| Comaprative Example 1 | Notadded | ≤55°C | 4400 | 1.0 | 3.5 | 11.5 | 55 | None | Good | Good | Fair |
| Comaprative Example 2 | Not added | ≤65°C | 4000 | 1.0 | 4.0 | 12 | 100 | None | Fair | Fair | Poor |
| Comaprative Example 3 | 9.0 | No grinding | N/A | N/A | N/A | 15 | 0 | Occurred | Poor | Poor | Very poor |
| Comaprative Example 4 | Not added | Grinding impossible | 9000 | 4.0 | 8.0 | 13.5 | 3 | None | Poor | Poor | Poor |

As shown in Table 1, hydrotalcite having a BET value of 1 m$^2$/g to 30 m$^2$/g and a Zr content of 50 ppm or lower can be synthesized by preparing a slurry that contains at least one material selected from the group consisting of hydroxides, oxides, and carbonates of aluminum, magnesium, or zinc, or a slurry that contains a carboxylic acid group-containing compound as well as the at least one material selected from the group consisting of hydroxides, oxides, and carbonates of aluminum, magnesium, or zinc; subjecting the slurry to wet grinding with zirconia beads or zirconia silica beads while maintaining the temperature of the slurry at 50°C or lower, so as to give particles in the slurry an average secondary particle size D50 of 1.5 $\mu$m or smaller and D90 of 10 $\mu$m or smaller; and adding the rest of the materials to the slurry and hydrothermally treating the resulting slurry.

Also, since the obtained hydrotalcite has a Zr content of 50 ppm or lower, the hydrotalcite is excellent as an additive for resins. The hydrotalcite, when added to a polyvinyl chloride resin, gives excellent characteristics including heat resistance, press heat resistance, and transparency, especially excellent transparency, to the resin.

**Claims**

1. A method for producing hydrotalcite having a BET value of 1 m$^2$/g to 30 m$^2$/g and a Zr content of 50 ppm or lower from materials including an aluminum compound and including a magnesium compound and/or a zinc compound, the method comprising:

   a slurry preparation step of preparing a slurry that contains a material selected from the group consisting of hydroxides, oxides, and carbonates of aluminum, and further contains at least one material selected from the group consisting of hydroxides, oxides and carbonates of magnesium and of zinc;
   a wet grinding step of subjecting the slurry to wet grinding with zirconia beads or zirconia silica beads while maintaining the temperature of the slurry at 50°C or lower, so as to give particles in the slurry an average secondary particle size D50 of 1.5 $\mu$m or smaller and D90 of 10 $\mu$m or smaller; and
   a step of synthesizing the hydrotalcite from the materials via hydrothermally treating a slurry obtained with the wet grinding step.

2. The method for producing hydrotalcite according to claim 1,
   wherein the slurry preparation step further comprises adding a carboxylic acid group-containing compound to the slurry so as to give a solids concentration of 25% by mass or higher to the slurry.

3. The method for producing hydrotalcite according to claim 1 or 2,
   wherein the wet grinding in the wet grinding step is performed while the temperature of the slurry is maintained at 40°C or lower, and hydrotalcite having a Zr content of 10 ppm or lower is synthesized in the hydrothermal treatment step.

4. The method for producing hydrotalcite according to any one of claims 1 to 3, the method further comprising the step of filtering the slurry after the hydrothermal treatment step to obtain hydrotalcite and a filtrate, and bringing the filtrate into contact with carbon dioxide gas to collect carbonate.

5. The method for producing hydrotalcite according to any one of claims 2 to 4,
   wherein the carboxylic acid group-containing compound is at least one carboxylic acid group-containing compound selected from saturated fatty acids, hydroxycarboxylic acids, aromatic carboxylic acids, dicarboxylic acids, and oxocarboxylic acids.

6. The method for producing hydrotalcite according to any one of claims 1 to 5,
   including supplying carbonate ions to the slurry between the wet grinding step and the step of synthesizing the hydrotalcite.

7. Hydrotalcite obtainable by the method according to any one of claims 1 to 6, the hydrotalcite having
   a BET specific surface area of 1 m$^2$/g to 30 m$^2$/g, and
   a Zr content of 50 ppm or lower.

**Patentansprüche**

1. Verfahren für die Herstellung von Hydrotalcit, das einen BET-Wert von 1 m$^2$/g bis 30 m$^2$/g und einen Zr-Gehalt von 50 ppm oder weniger aufweist, aus Materialien, die eine Aluminiumverbindung und eine Magnesiumverbindung und/oder eine Zinkverbindung umfassen,
wobei das Verfahren umfasst:

einen Aufschlämmungszubereitungsschritt des Zubereitens einer Aufschlämmung, die ein Material enthält, das aus der Gruppe ausgewählt ist bestehend aus Hydroxiden, Oxiden und Carbonaten von Aluminium ausgewählt ist und ferner mindestens ein Material enthält ausgewählt aus der Gruppe bestehend aus Hydroxiden, Oxiden und Carbonaten von Magnesium und von Zink,
einen Nassmahlschritt des Unterwerfens der Aufschlämmung Nassmahlen mit Zirkoniumdioxidperlen oder Zirkoniumdioxid-Siliciumdioxidperlen, während die Temperatur der Aufschlämmung bei 50°C oder darunter gehalten wird, um Teilchen in der Aufschlämmung eine durchschnittliche sekundäre Teilchengröße D50 von 1,5 $\mu$m oder geringer und D90 von 10 $\mu$m oder geringer zu geben, und
einen Schritt des Synthetisierens des Hydrotalcits aus den Materialien durch hydrothermisches Behandeln einer Aufschlämmung, die mit dem Nassmahlschritt erhalten worden ist.

2. Verfahren für die Herstellung von Hydrotalcit nach Anspruch 1,
wobei der Aufschlämmungszubereitungsschritt ferner das Zusetzen einer Carbonsäuregruppe enthaltenden Verbindung zu der Aufschlämmung umfasst, um der Aufschlämmung eine Feststoffkonzentration von 25 Masse-% oder höher zu geben.

3. Verfahren für die Herstellung von Hydrotalcit nach Anspruch 1 oder 2,
wobei das Nassmahlen im Nassmahlschritt ausgeführt wird, während die Temperatur der Aufschlämmung bei 40°C oder darunter gehalten wird und Hydrotalcit, das einen Zr-Gehalt von 10 ppm oder darunter aufweist, im hydrothermalen Behandlungsschritt synthetisiert wird.

4. Verfahren für die Herstellung von Hydrotalcit nach einem der Ansprüche 1 bis 3, wobei das Verfahren ferner den Schritt des
Filtrierens der Aufschlämmung nach dem hydrothermalen Behandlungsschritt, um Hydrotalcit und ein Filtrat zu erhalten, und Inkontaktbringens des Filtrats mit Kohlendioxidgas umfasst, um Carbonat aufzufangen.

5. Verfahren für die Herstellung von Hydrotalcit nach einem der Ansprüche 2 bis 4,
wobei die Carbonsäuregruppe enthaltende Verbindung mindestens eine Carbonsäuregruppe enthaltende Verbindung ist ausgewählt unter gesättigten Fettsäuren, Hydroxycarbonsäuren, aromatischen Carbonsäuren, Dicarbonsäuren und Oxocarbonsäuren.

6. Verfahren für die Herstellung von Hydrotalcit nach einem der Ansprüche 1 bis 5,
umfassend das Liefern von Carbonationen an die Aufschlämmung zwischen dem Nassmahlschritt und dem Schritt des Synthetisierens des Hydrotalcits.

7. Hydrotalcit erhältlich durch das Verfahren nach einem der Ansprüche 1 bis 6,
wobei das Hydrotalcit einen BET-spezifischen Oberflächenbereich von 1 m$^2$/g bis 30 m$^2$/g und einen Zr-Gehalt von 50 ppm oder geringer aufweist.


## Revendications

1. Procédé de production d'hydrotalcite ayant une valeur BET de 1 m$^2$/g à 30 m$^2$/g et une teneur en Zr de 50 ppm ou inférieure à partir de matériaux incluant un composé d'aluminium et incluant un composé de magnésium et/ou un composé de zinc,
le procédé comprenant :

une étape de préparation de suspension préparant une suspension qui contient un matériau choisi dans le groupe consistant en hydroxydes, oxydes, et carbonates d'aluminium, et contient de plus au moins un matériau choisi dans le groupe consistant en hydroxydes, oxydes et carbonates de magnésium et de zinc ;
une étape de broyage humide soumettant la suspension à un broyage humide avec des billes d'oxyde de zirconium ou des billes d'oxyde de zirconium silice tout en maintenant la température de la suspension à 50°C ou inférieure, afin de fournir des particules dans la suspension d'une taille moyenne de particule secondaire D50 de 1,5 $\mu$m ou inférieure et D90 de 10 $\mu$m ou inférieure ; et

une étape de synthèse de l'hydrotalcite à partir des matériaux via un traitement hydrothermique d'une suspension obtenue par l'étape de broyage humide.

2. Procédé de production d'hydrotalcite selon la revendication 1,
   dans lequel l'étape de préparation de suspension comprend de plus l'addition d'un composé contenant un groupe acide carboxylique à la suspension afin de fournir une concentration en solides de 25 % en masse ou supérieure à la suspension.

3. Procédé de production d'hydrotalcite selon la revendication 1 ou 2,
   dans lequel le broyage humide dans l'étape de broyage humide est réalisé alors que la température de la suspension est maintenue à 40°C ou inférieure, et de l'hydrotalcite ayant une teneur en Zr de 10 ppm ou inférieure est synthétisée dans l'étape de traitement hydrothermique.

4. Procédé de production d'hydrotalcite selon l'une quelconque des revendications 1 à 3, le procédé comprenant de plus l'étape de
   filtration de la suspension après l'étape de traitement hydrothermique pour obtenir de l'hydrotalcite et un filtrat, et mise en contact du filtrat avec du gaz de dioxyde de carbone pour recueillir du carbonate.

5. Procédé de production d'hydrotalcite selon l'une quelconque des revendications 2 à 4,
   dans lequel le composé contenant un groupe acide carboxylique est au moins un composé contenant un groupe acide carboxylique choisi parmi des acides gras saturés, des acides hydroxycarboxyliques, des acides carboxyliques aromatiques, des acides dicarboxyliques, et des acides oxocarboxyliques.

6. Procédé de production d'hydrotalcite selon l'une quelconque des revendications 1 à 5,
   incluant l'introduction d'ions carbonate dans la suspension entre l'étape de broyage humide et l'étape de synthèse de l'hydrotalcite.

7. Hydrotalcite pouvant être obtenue par le procédé selon l'une quelconque des revendications 1 à 6, l'hydrotalcite présentant
   une surface spécifique BET de 1 $m^2$/g à 30 $m^2$/g, et
   une teneur en Zr de 50 ppm ou inférieure.

FIG.1

EP 2 778 137 B1

$2\theta$(deg)

FIG.2

FIG.3

$2\theta$(deg)

# FIG.4

$2\theta$(deg)

FIG.5

$2\theta$(deg)

FIG.6

## FIG.7

FIG.8

EP 2 778 137 B1

FIG.9

$2\theta(\text{deg})$

# FIG.10

**EP 2 778 137 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006017828 A
- JP 2004269317 A
- US 20040141907 A1